(19)

Europäisches
Patentamt

European
Patent Office

Office européen
des brevets

(11) **EP 2 963 614 A1**

(12) **EUROPEAN PATENT APPLICATION**

(43) Date of publication:
**06.01.2016 Bulletin 2016/01**

(51) Int Cl.:
***G06T 7/00*** *(2006.01)*

(21) Application number: **14306107.5**

(22) Date of filing: **04.07.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **INRIA - Institut National de Recherche
en
Informatique et en Automatique
78150 Le Chesnay (FR)**

(72) Inventors:
• **Blaschko, Matthew Brian**
  **75013 PARIS (FR)**
• **Orlando, José Ignacio**
  **7200 Las Flores (AR)**

(74) Representative: **Cabinet Netter
36, avenue Hoche
75008 Paris (FR)**

(54) **Method for determining the position of elongated elements in an image**

(57) The present invention concerns a method for determining the position of elongated elements in an image, the method being implemented in a computer and comprising:

- providing an image in which elongated elements are to be searched, the image having pixels, each pixel exhibiting unary features and pairwise features,

- defining a label vector y, which associates to each pixel of the images, a first value if a part of an elongated element is present in the pixel and a second value if no elongated element is present in the pixel, the first value being different from the second value, and

- searching the label vector y minimizing an energy function E.

EP 2 963 614 A1

**Description**

TECHNICAL FIELD OF THE INVENTION

The present invention concerns a method for determining the position of elongated elements in an image. The present invention also relates to a computer program product adapted to cause execution of the method.

BACKGROUND OF THE INVENTION

Retinal images - also known as fundus images or retinographies - are projective color images of the inner surface of the human eye. Retinal images allow physicians to observe the retina and its internal parts, including the vascular tree, the optic disc and the fovea. Retinal blood vessels provide useful information for several applications, including medical diagnosis and screening of ophthalmological and cardiovascular diseases. The vessels tortuosity, for instance, can be used to characterize hypertensive retinopathy, and the measurement of vessels diameter is utilized to diagnose hypertension. Changes in the vasculature distribution are also interpreted as a possible symptom of diabetic retinopathy.

Moreover, vessels are used to assist laser surgeries and as landmarks for image registration. All these applications require the segmentation of the retinal vasculature. In current best practice, trained specialists delineate the vessels manually, although this is a particularly tedious and time-consuming task. Difficulties in the imaging process increase the variability among segmentations performed by different human observers. Inadequate contrast between vessels and background or uneven background illumination are examples of such difficulties.

It is therefore desirable to develop automatic strategies for blood vessel segmentation without human intervention.

In the last two decades, several approaches have been introduced to solve the segmentation problem.

The segmentation algorithms can be classified into two general categories, supervised and unsupervised.

Supervised methods require a set of labeled training samples to learn a model. Such samples are composed of pixels with known annotations and their features. Most of the effort in supervised segmentation involves finding new features for training, or better classifiers to perform the pixel classification task.

For instance, in an article whose title is "Retinal blood vessel segmentation using line operators and support vector classification" IEEE T-MI 26 (10) pages 1357-1365 dated 2007, Ricci and Perfetti combine a linear support vector machine (SVM) with a line detector feature. Similarly, in an article whose title is "A new supervised method for blood vessel segmentation in retinal images by using gray-level and moment invariants-based features" IEEE T-MI 30 (1) pages 1200-1213 dated 2011, Marin et al. compute a 7-D vector composed of gray-level and moment invariant-based features for pixel representation, and use them in combination with a neural network.

Unsupervised methods do not require training from labeled data, and usually involve systems based on clustering, region-oriented approaches or thresholding after vessel enhancement with filters, line detectors or morphological operators. More complex image processing operations have been combined with vessel centerline detection at different scales to obtain the final segmentation. The main advantage of unsupervised methods is that unsupervised methods do not need to be obtained using manual annotations. However, unsupervised methods have reported worse results than supervised approaches, as notably shown in Nguyen et al. in an article "An effective retinal blood vessel segmentation method using multi-scale line detection" taken from the review Pattern Recognition dated 2012.

However, none of the above-mentioned methods have yet proved to be accurate enough to be assumed as a standard by the medical community.

SUMMARY OF THE INVENTION

There is therefore a need for a more accurate method for determining the position of elongated elements in an image.

To this end, It is proposed a method for determining the position of elongated elements in an image, the method being implemented in a computer and comprising providing an image in which elongated elements are to be searched, the image having pixels, each pixel exhibiting unary features and pairwise features. The method also comprises defining a label vector, which associates to each pixel of the images, a first value if a part of an elongated element is present in the pixel and a second value if no elongated element is present in the pixel, the first value being different from the second value and searching the label vector y minimizing an energy function E, wherein the energy function is:

$$E(y) = \sum_i \psi_u\,(yi, xi) + \sum_{i<j} \psi_p\,(yi, yj, fi, fj)$$

where:

- i is an integer comprised between 1 and the number of pixels of the provided image,
- j is an integer comprised between 1 and the number of pixels of the provided image,
- $\psi_u$ is a first function,
- yi is the value of the label vector at the pixel i,
- xi is the unary features of the pixel i,
- $\psi_p$ is a second function, the second function being a linear combination of Gaussian functions.
- yj is the value of the label vector at the pixel i,
- fi is the pairwise features of the pixel i, and
- fj is the pairwise features of the pixel j.

According to further aspects which are advantageous but not compulsory, the method for determining the position of elongated elements in an image might incorporate one or several of the following features, taken in any admissible combination:

- the second equation is such that

$$\psi_p\,(yi, yj, fi, fj) = \mu(yi, yj) \sum_{m=1}^{K} w^{(m)} k^{(m)}\left(f_i, f_j\right)$$

where

- K is an integer specifying the number of pairwise features to consider,
- $k^{(m)}$ is a Gaussian function,
- $w^{(m)}$ is a linear combination weight, and
- $\mu$ is a label compatibility function.

- the second equation is such that

$$\psi_p\,(yi, yj, fi, fj) = \mu(yi, yj) \sum_{m=1}^{K} w^{(m)} k^{(m)}\left(f_i, f_j\right)$$

where

- K is an integer specifying the number of pairwise features to consider,
- $k^{(m)}$ is a Gaussian function,
- $w^{(m)}$ is a linear combination weight, and
- $\mu$ is a label compatibility function.

- the label compatibility function is such that $\mu(yi, yj) = [yi \neq yj]$.

- the Gaussian function is such that $k^{(m)}\left(f_i, f_j\right) = exp\left(-\dfrac{|pi-pj|^2}{2\theta_p^2} - \dfrac{\left|f_i^{(m)} - f_j^{(m)}\right|^2}{2\theta_{(m)}^2}\right)$

where

- pi is the coordinate vector of pixel i,
- pj is the coordinate vector of pixel j,
- $\theta_p$ and $\theta_m$ are weight parameters.

- the first function $\psi_u$ is a log-likelihood of the label vector y.
- the first function $\psi_u$ is such that $\psi_u\ (yi,\ xi) = - \langle w_{uyi}, xi \rangle - \beta_{yi}$ where <> is an inner product, $w_{uyi}$ is a weight vector and $\beta_{yi}$ is a bias term, respectively, both associated to is the value of the label vector y at the pixel i.
- the first function $\psi_u$ and the second function $\psi_p$ are learned by a learning algorithm.
- the learning algorithm is a supervised algorithm using a structured output support vector machine.
- the first function $\psi_u$ and the second function $\psi_p$ are chosen so as to minimize the distance between the label vector found for an image at the searching step and the label vector found by an human observer in the same image.
- the distance is a function of sensitivity and specificity.
- the elongated elements are blood vessels and the image is a retinal image.
- the second function $\psi_p$ is a linear combination of Gaussian kernels.

The invention also concerns a computer program product comprising a computer readable medium, having thereon a computer program comprising program instructions, the computer program being loadable into a data-processing unit and adapted to cause execution of the previously described method when the computer program is run by the data-processing unit.

BRIEF DESCRIPTION OF THE DRAWINGS

The invention will be better understood on the basis of the following description which is given in correspondence with the annexed figures and as an illustrative example, without restricting the object of the invention. In the annexed figures:

- figure 1 is an image of an healthy retinal image,
- figure 2 is a representation of a human labeling of figure 1,
- figure 3 is a representation of the segmentation of figure 1 obtained after carrying out an example of method for determining the position of elongated elements in an image,
- figure 4 is an image of a pathological retinal image,
- figure 5 is a representation of a human labeling of figure 4, and
- figure 6 is a representation of the segmentation of figure 4 obtained after carrying out an example of method for determining the position of elongated elements in an image.

DETAILED DESCRIPTION OF SOME EMBODIMENTS

It is proposed a method for determining the position of elongated elements in an image.

An elongated element is thin, branched structure. The different elongated elements present in an image usually form a set or network.

As an example, the elongated elements are blood vessels and the image is a retinal image. Indeed, the task of recognizing the blood vessels in a retinal image is tedious for a human. Another example concerns geography wherein the elongated elements are rivers and the image is taken from a plane.

The method for determining the position of elongated elements is implemented in a computer.

For this, for instance, the person who carries out the method a computer program product comprising a computer readable medium, having thereon a computer program comprising program instructions, the computer program being loadable into a data-processing unit and adapted to cause execution of the method the computer program is run by the data-processing unit.

The method comprises a step of providing an image in which elongated elements are to be searched.

In the remainder of the description, as an illustration, the image is a retinal image and the elongated elements are blood vessels.

The provided image has n pixels, n being an integer strictly superior to 1. Generally, n is superior to 300 000. In specific application, the integer is superior to 500 000.

For the remainder of the description, an integer i is defined, i being an integer comprised between 1 and the number of pixels of the provided image

Each pixel i has unary features xi. The notation "xi" refers to the "ith variable named x".

A unary feature xi is a feature which is only relative to the pixel i itself. For instance, the color values of a pixel are a unary feature.

It should also be noted that, according to a specific embodiment, a unary feature could be the output of a filter, which would be based on multiple pixels in the neighborhood of pixel i.

For this method, the unary features x are obtained by applying a 2-D Gabor wavelet algorithm, a line detector algorithm or a vessel enhancement process. An example of 2-D Gabor wavelet algorithm is described in Soares et al.

whose title is "Retinal vessel segmentation using the 2-D Gabor wavelet and supervised classification" Medical Imaging, IEEE Transactions on, volume 25, no 9, pp.1214,1222, dated 2006. An example of line detector algorithm is present in the precited article by Ricci and Perfetti. Another example of vessel enhancement process is described in an article by Sinthanayothin et al. whose title is "Automated localization of the optic disc, fovea, and retinal blood vessels from digital colour fundus imaging" British Journal of Ophthlmology 83(8) pages 902-910 dated 1999.

Each pixel i has pairwise features fi.

A unary feature fi is a feature which is relative to the pixel i itself and at least one of the other pixel. For instance, the number of pixels with the same color values as the considered pixel is a pairwise feature.

For this method, the vessel enhanced image obtained after applying a vessel treatment process is a set of pairwise features f. An example of vessel treatment process is notably described in an article by Saleh et al. whose title is "An efficient algorithm for retinal blood vessel segmentation using h-maxima transform and multilevel thresholding." Computer Methods in Biomechanics and Biomedical Engineering 15(5) pages 517-525 dated 2012.

In the present invention, the unary features x and the pairwise features f are determined using preprocessed images.

The method also comprises a step of defining a label vector y.

The label vector y associates to each pixel of the images a first value y1 if a part of an elongated element is present in the pixel and a second value y2 if no elongated element is present in the pixel. The first value y1 is different from the second value y2. In other words, the label vector y is a labeling over all pixels of the image in a label space noted L.

In the present case, the first value y1 is equal to 1 and the second value y2 is equal to -1. Thus, by definition, L= {1, -1}.

Determining the position of elongated elements in the image is thus equivalent to determining the label vector y.

The method also comprises a step of searching the label vector y minimizing an energy function E.

The energy function E can be expressed as:

$$E(y) = \sum_i \psi_u \left(yi, xi\right) + \sum_{i<j} \psi_p \left(yi, yj, fi, fj\right)$$

where:

- j is an integer comprised between 1 and the number of pixels of the provided image,
- $\psi_u$ is a first function,
- yi is the value of the label vector y at the pixel i,
- $\psi_p$ is a second function, the second function being a linear combination of Gaussian functions.
- yj is the value of the label vector y at the pixel j,and
- fj is the pairwise features of the pixel j.

In other words, this means that the segmentation task becomes an energy minimization problem in a fully-connected conditional random field. Originally in conditional random fields, images are mapped to graphs, where each pixel represents a node, and every node is connected with an edge to its immediate neighbors. In contrast, in the fully-connected version of a conditional random field, the notion of immediate neighbors disappears since each node is assumed to be a neighbor of every other.

Consequently, determining the label vector y minimizing the energy function E enables to take into account not only neighboring information but also long-range interactions between pixels. Such property improves the segmentation accuracy of the whole, but without innovations in inference algorithm makes the method computationally expensive. This results in a relatively slow method.

So as to avoid this, the method also suggests to implement a mean field approximation of the original conditional random field by restricting that the second function $\psi_p$ is a linear combination of Gaussian functions. Preferably, each Gaussian function is a Gaussian kernel. With this trade-off, an accurate segmentation can be obtained in less than a second on a standard desktop computer.

Thus, the method enables to obtain an accurate determination of the position of elongated elements in an image in relatively fast way.

According to such fully-connected conditional random field approach, the first function $\psi_u$ represents a unary potential, also labelled unary energy.

The first function $\psi_u$ corresponds a log-likelihood of the label vector y.

According to an embodiment, such first function $\psi_u$ is computed with the help of a classifier.

Alternatively, the first function $\psi_u$ can be expressed according to the following expression:

$$\psi_u(yi, xi) = -\langle w_{u_{yi}}, xi \rangle - \beta_{yi}$$

Where <> is an inner product, $w_{u_{yi}}$ is a weight vector and $\beta_{yi}$ is a bias term, respectively, both associated to is the value of the label vector y at the pixel i.

According to the fully-connected conditional random field approach, second function $\psi_p$ represents a pairwise potential, also labelled pairwise energy.

Similarly to the first function $\psi_u$, pairwise potential defines a similar distribution than the unary potential but considering only the interactions between pixels features and their labels.

The second function $\psi_p$ expresses as:

$$\psi_p(yi, yj, fi, fj) = \mu(yi, yj) \sum_{m=1}^{K} w^{(m)} k^{(m)}(f_i, f_j)$$

where

- K is an integer defined by the number of pairwise features,
- $k^{(m)}$ is a Gaussian function,
- $w^{(m)}$ is a linear combination weight, and
- $\mu$ is a label compatibility function.

Preferably, each function $k^{(m)}$ is a Gaussian kernel and expresses as:

$$k^{(m)}(f_i, f_j) = exp\left(-\frac{|pi - pj|^2}{2\theta_p^2} - \frac{\left|f_i^{(m)} - f_j^{(m)}\right|^2}{2\theta_{(m)}^2}\right)$$

where

- pi is the coordinate vector of pixel i,
- pj is the coordinate vector of pixel j,
- $\theta_p$ and $\theta_m$ are weight parameters.

The fact that the coordinate vectors are included in the expression of a Gaussian function k enables to increase the effect of close pixels over distant ones. The second term of the exponential function represents that a locally computed function of the image should be similar, that is the image patches around the two pixels i and j should have similar statistics.

According to a preferred embodiment, the label compatibility function $\mu$ is given by the Potts model. This means that the label compatibility function $\mu$ can be expressed according to the following expression:

$$\mu(yi, yj) = [\, yi \neq yj\,]$$

Such choice of expression for the label compatibility function $\mu$ allows penalizing nearby similar pixels that are assigned to different labels.

In a preferred embodiment, the first function $\psi_u$ and the second function $\psi_p$ are learnt by a learning algorithm.

Advantageously, the learning algorithm is a supervised algorithm using a structured output support vector machine (often labeled under the acronym SOSVM). Further information of SOSVM can be found in the article by Tsochantaridis et al. whose title is "Large Margin Methods for Structured and Interdependent Output Variables" Journal of Machine Learning Research 6 pages 1453-1484 dated 2005. This means that the parameters for both functions $\psi_u$ and $\psi_p$ are learned using a SOSVM.

The first function $\psi_u$ and the second function $\psi_p$ are chosen so as to minimize the distance between the label vector found at the searching step for an image and the label vector found by a human observer in the same image.

Preferably, the distance is a function of sensitivity Se and specificity Sp. For instance, the distance is a linear function of sensitivity Se and specificity Sp.

More specifically, it is proposed to minimize the L2 norm (euclidean distance) between a two-dimensional vector Se, Sp for the present method and two-dimensional vector Se, Sp for the method for determining carried out by an human.

By definition, sensitivity Se is the ratio of the number of true positives TP with the sum of the number of true positives TP and the number of false negatives FN. This expresses mathematically as:

$$Se = \frac{TP}{TP + FN}$$

By definition, specificity Sp is the ratio of the number of true negatives TN with the sum of the number of true negatives TN and the number of false positives FP. This expresses mathematically as:

$$Sp = \frac{TN}{TN + FP}$$

Sensitivity Se and specificity Sp are good indicators of the capability of the method to identify blood vessels and to exclude all other classes, respectively. In this context, sensitivity Se is important as it reflects an accurate estimation of the vessel pixels, the primary goal in vessel segmentation for fundus image analysis. Using such indicators enable to obtain a first function $\psi_u$ and a second function $\psi_p$ which enables to obtain a more accurate label vector y at the end of the carrying out of the method.

In practice, the learning algorithm uses the publicly available data set DRIVE (see the article whose title is "Ridge based vessel segmentation in color images of the retina" IEEE T-MI 23 (4) pages 501-509 dated 2004 by J. Staal et al). Using the data set DRIVE enables to quantify blood vessel segmentation performance.

For each data set, a retinal image is provided and two associated labeled figures by two distinct human observers.

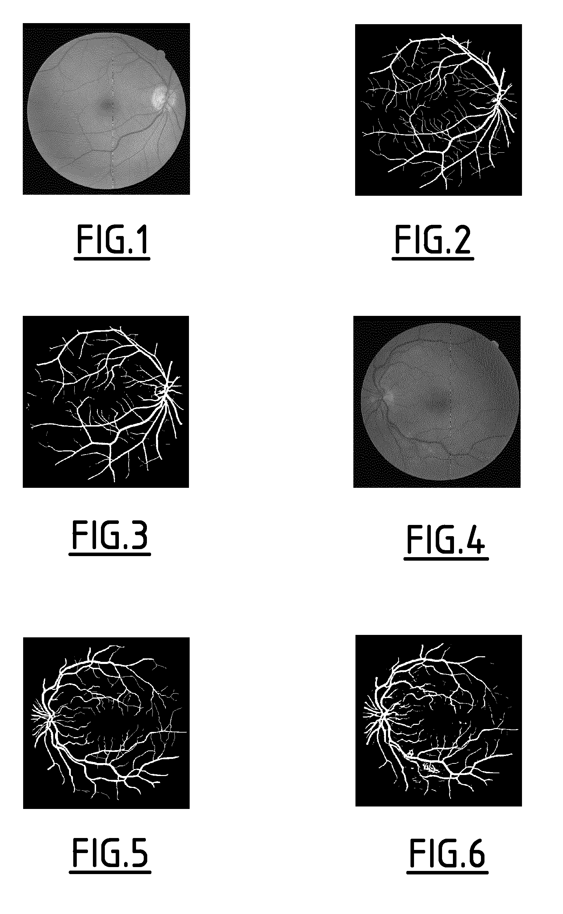

As an example, figure 1 shows the retinal image obtained for a healthy eye and figure 2 illustrates a representation of a human labeling of figure 1. In contrast, figure 3 shows the retinal image obtained for a pathological eye and figure 4 illustrates a representation of a human labeling of figure 3.

The data set is divided into two sets: one for training and one for test, each of them containing 20 images. The test set provides two manual segmentations generated by two different experts for each image. The selection of the first observer is accepted as ground-truth and used for performance evaluation in literature. The training set includes a set of manual segmentations made by the first observer. The training set is the set used in the learning algorithm.

As explained before, as the unary feature xi and pairwise features f are determined without using the learning algorithm, the aim of the learning algorithm in this specific example is to obtain the remaining parameters which are the weights for the unary features $w_u$, the bias term $\beta$ and each $w^{(m)}$ for the different pairwise kernels.

Such parameters can be obtained by applying a structured output SVM algorithm.

Such approach enables to obtain specific functions $\psi_u$ and $\psi_p$ which are particularly relevant for carrying out the proposed method for determining elongated elements in the provided images. Figures 3 and 6 which correspond to the segmentation results obtained by carrying out the suggested method shows qualitatively that the results are similar to the results obtained by a human. More precisely, extensive comparison with state-of-the-art methods has shown that our approach is the only fully-automated segmentation algorithm that achieves results on par with a human annotator as measured by sensitivity and specificity. Our method is statistically tied with the expert annotator for both measures. Notably, competing methods suffer as measured by sensitivity. In contrast, our method closely matches the performance of an expert human both in sensitivity and specificity, and achieves a substantially higher sensitivity than all other competing methods tested in terms of sensitivity and specificity in the prior art.

It should also be noticed that the approach, in contrast with several published works, no test data was utilized to adjust the parameters of the method. Notably, there is no optimal threshold manually optimized.

In this description, a novel method for blood vessel segmentation in fundus images based on a discriminatively trained, fully connected conditional random field model has been detailed. Retinal image analysis is greatly aided by blood vessel segmentation as the vessel structure may be considered both a key source of signal, e.g. in the diagnosis of diabetic retinopathy, or a nuisance, e.g. in the analysis of pigment epithelium or choroid related abnormalities.

In addition, it has been proposed to use a discriminatively trained conditional random field model with more expressive potentials. The Applicant has indeed found that the use of Gaussian kernels combined with principled discriminative training based on a structured output support vector machine yields the first fully automated system reported in the literature that achieves results statistically indistinguishable from an expert human annotator, as measured by sensitivity Se and specificity Sp.

In addition, such method might be used in other contexts such as determining the location of a river in an image. For instance, it could be imagined to provide a set of images obtained with an expensive detector for the training step and then, to apply the method to images obtained with a cheaper detector (with a poorest resolution for instance) to determine the position of the river.

The embodiments and alternative embodiments considered here-above can be combined to generate further embodiments of the invention.

**Claims**

1. Method for determining the position of elongated elements in an image, the method being implemented in a computer and comprising:

    - providing an image in which elongated elements are to be searched, the image having pixels, each pixel exhibiting unary features (xi, xj, x) and pairwise features (fi, fj, f),
    - defining a label vector y, which associates to each pixel of the images, a first value (y1) if a part of an elongated element is present in the pixel and a second value (y2) if no elongated element is present in the pixel, the first value (y1) being different from the second value (y2), and
    - searching the label vector y minimizing an energy function E, wherein the energy function is:

$$E(y) = \sum_i \psi_u (yi, xi) + \sum_{i<j} \psi_p (yi, yj, fi, fj)$$

    where:

    • i is an integer comprised between 1 and the number of pixels of the provided image,
    • j is an integer comprised between 1 and the number of pixels of the provided image,
    • $\psi_u$ is a first function,
    • yi is the value of the label vector at the pixel i,
    • xi is the unary features of the pixel i,
    • $\psi_p$ is a second function, the second function being a linear combination of Gaussian functions.
    • yj is the value of the label vector at the pixel i,
    • fi is the pairwise features of the pixel i, and
    • fj is the pairwise features of the pixel j.

2. Method according to claim 1, wherein

$$\psi_p (yi, yj, fi, fj) = \mu(yi, yj) \sum_{m=1}^{K} w^{(m)} k^{(m)}(f_i, f_j)$$

    where

    • K is an integer specifying the number of pairwise features to consider,
    • $k^{(m)}$ is a Gaussian function,
    • $w^{(m)}$ is a linear combination weight, and
    • $\mu$ is a label compatibility function.

3. Method according to claim 2, wherein $\mu(yi, yj) = [yi \neq yj]$.

4. Method according to claim 2 or 3, wherein

$$k^{(m)}(f_i, f_j) = exp\left(-\frac{|pi - pj|^2}{2\theta_p^2} - \frac{\left|f_i^{(m)} - f_j^{(m)}\right|^2}{2\theta_{(m)}^2}\right)$$

where

- pi is the coordinate vector of pixel i,
- pj is the coordinate vector of pixel j,
- $\theta_p$ and $\theta_m$ are weight parameters.

5. Method according to any one of claims 1 to 4, wherein the first function $\psi_u$ is a log-likelihood of the label vector y.

6. Method according to claim 5, wherein

$$\psi_u(yi, xi) = -\langle w_{u_{yi}}, xi \rangle - \beta_{yi}$$

where <> is an inner product, $w_{u_{yi}}$ is a weight vector and $\beta_{yi}$ is a bias term, respectively, both associated to is the value of the label vector y at the pixel i.

7. Method according to any one of claims 1 to 6, wherein the first function $\psi_u$ and the second function $\psi_p$ are learned by a learning algorithm.

8. Method according to claim 7, wherein the learning algorithm is a supervised algorithm using a structured output support vector machine.

9. Method according to any one of claims 1 to 8, wherein the first function $\psi_u$ and the second function $\psi_p$ are chosen so as to minimize the distance between the label vector found for an image at the searching step and the label vector found by an human observer in the same image.

10. Method according to claim 9, wherein the distance is a function of sensitivity and specificity.

11. Method according to any one of claims 1 to 10, wherein the elongated elements are blood vessels and the image is a retinal image.

12. Method according to any one of claims 1 to 11, wherein the second function $\psi_p$ is a linear combination of Gaussian kernels.

13. A computer program product comprising a computer readable medium, having thereon a computer program comprising program instructions, the computer program being loadable into a data-processing unit and adapted to cause execution of the method according to any one of claims 1 to 12 when the computer program is run by the data-processing unit.

FIG.1

FIG.2

FIG.3

FIG.4

FIG.5

FIG.6

Europäisches
Patentamt

European
Patent Office

Office européen
des brevets

## EUROPEAN SEARCH REPORT

Application Number

EP 14 30 6107

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Philipp Krähenbühl ET AL: "Efficient Inference in Fully Connected CRFs with Gaussian Edge Potentials", Advances in Neural Information Processing Systems, 1 January 2011 (2011-01-01), pages 1-9, XP055157526, Retrieved from the Internet: URL:http://graphics.stanford.edu/projects/densecrf/densecrf.pdf [retrieved on 2014-12-09] | 1-4,6,7, 9-13 | INV. G06T7/00 |
| Y | * page 1, last paragraph * * figure 2 * * equations 1-3 * * page 2, penultimate paragraph * * page 3, line 3 - line 4 * * page 6, paragraph 2 * * page 5, paragraph 2 * * paragraph below equation 2 * * second paragraph below equation 3 * ----- | 5,8 | |
| Y | YIMENG ZHANG ET AL: "Efficient inference for fully-connected CRFs with stationarity", COMPUTER VISION AND PATTERN RECOGNITION (CVPR), 2012 IEEE CONFERENCE ON, IEEE, 16 June 2012 (2012-06-16), pages 582-589, XP032232123, DOI: 10.1109/CVPR.2012.6247724 ISBN: 978-1-4673-1226-4 * paragraph below equation 1 * ----- -/-- | 5 | TECHNICAL FIELDS SEARCHED (IPC) G06T |

The present search report has been drawn up for all claims

| Place of search | Date of completion of the search | Examiner |
|---|---|---|
| Munich | 17 December 2014 | Winkler, Gregor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 30 6107

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | PING ZHONG ET AL: "A Multiple Conditional Random Fields Ensemble Model for Urban Area Detection in Remote Sensing Optical Images", IEEE TRANSACTIONS ON GEOSCIENCE AND REMOTE SENSING, IEEE SERVICE CENTER, PISCATAWAY, NJ, US, vol. 45, no. 12, 1 December 2007 (2007-12-01), pages 3978-3988, XP011196730, ISSN: 0196-2892, DOI: 10.1109/TGRS.2007.898276 * page 3980, right-hand column, lines 10-12,25-26 * ----- | 6 | |
| Y | Chunhua Shen ET AL: "StructBoost: Boosting Methods for Predicting Structured Output Variables CONTENTS", , 9 February 2014 (2014-02-09), pages 1-19, XP055158400, Retrieved from the Internet: URL:http://arxiv.org/pdf/1302.3283.pdf [retrieved on 2014-12-12] * page 9, left-hand column, line 6 - line 11 * ----- | 8 | |
| A | FRANCESCO CIOMPI ET AL: "ECOC Random Fields for Lumen Segmentation in Radial Artery IVUS Sequences", 20 September 2009 (2009-09-20), MEDICAL IMAGE COMPUTING AND COMPUTER-ASSISTED INTERVENTION Â ? MICCAI 2009, SPRINGER BERLIN HEIDELBERG, BERLIN, HEIDELBERG, PAGE(S) 869 - 876, XP019130406, ISBN: 978-3-642-04270-6 pages 869-876, * page 870, line 17 - line 19 * ----- | 9,11 | |

TECHNICAL FIELDS SEARCHED (IPC)

The present search report has been drawn up for all claims

| Place of search | Date of completion of the search | Examiner |
|---|---|---|
| Munich | 17 December 2014 | Winkler, Gregor |

**EP 2 963 614 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **RICCI ; PERFETTI.** Retinal blood vessel segmentation using line operators and support vector classification. *IEEE T-MI,* 2007, vol. 26 (10), 1357-1365
- **MARIN.** A new supervised method for blood vessel segmentation in retinal images by using gray-level and moment invariants-based features. *IEEE T-MI,* 2011, vol. 30 (1), 1200-1213
- **NGUYEN et al.** *An effective retinal blood vessel segmentation method using multi-scale line detection,* 2012
- **SOARES et al.** Retinal vessel segmentation using the 2-D Gabor wavelet and supervised classification. *Medical Imaging, IEEE Transactions,* 2006, vol. 25 (9), 1214, , 1222

- **SINTHANAYOTHIN et al.** Automated localization of the optic disc, fovea, and retinal blood vessels from digital colour fundus imaging. *British Journal of Ophthlmology,* 1999, vol. 83 (8), 902-910
- **SALEH et al.** An efficient algorithm for retinal blood vessel segmentation using h-maxima transform and multilevel thresholding. *Computer Methods in Biomechanics and Biomedical Engineering,* 2012, vol. 15 (5), 517-525
- **TSOCHANTARIDIS et al.** Large Margin Methods for Structured and Interdependent Output Variables. *Journal of Machine Learning Research,* 2005, vol. 6, 1453-1484
- **J. STAAL.** Ridge based vessel segmentation in color images of the retina. *IEEE T-MI,* 2004, vol. 23 (4), 501-509